# EUROPEAN PATENT SPECIFICATION

(11) **EP 2 793 010 B1**
(45) Date of publication and mention of the grant of the patent: **15.05.2019**
(21) Application number: 14161208.5
(22) Date of filing: 24.03.2014
(51) Int. Cl.: G01L 19/00, G01L 7/08, G01L 19/06, G01L 19/14

(54) **Pressure sensor**
Drucksensor
Capteur de pression

(30) Priority: 29.03.2013 JP 2013071168
(43) Date of publication of application: 22.10.2014
(73) Proprietor: Fujikoki Corporation, Tokyo 158-0082 (JP)
(72) Inventor: Takatsuki, Osamu, Setagaya-ku, Tokyo 158-0082 (JP); Aoyama, Tomohisa, Setagaya-ku, Tokyo 158-0082 (JP); Mukai, Motohisa, Setagaya-ku, Tokyo 158-0082 (JP); Sumiyoshi, Yuichiro, Setagaya-ku, Tokyo 158-0082 (JP)
(74) Representative: Schweiger, Martin

(56) References cited:
- KR-A- 20130 025 804
- US-A- 3 602 744
- US-A1- 2005 194 362
- US-A1- 2008 060 440

## Description

### BACKGROUND OF THE INVENTION

### Field of the Invention

The present invention relates to a liquid sealed type pressure sensor in which a liquid is sealed in a pressure receiving space accommodating a pressure detection element.

### Description of the Conventional Art

Conventionally, there have been proposed various pressure sensors which output a voltage signal in correspondence to an external pressure from a pressure detection element, by sealing a liquid within a pressure receiving space in which the pressure detection element is accommodated, and transmitting a pressure applied to a pressure detection chamber from an external portion via the liquid.

As an example of the liquid sealed type pressure sensor, in patent document 1, there is described a pressure sensor which is connected to a pressure introduction pipe introducing a pressure from an external portion by a through hole formed in a bottom portion, is provided with a lid member connected to a pressure detection element by a weld portion along an outer periphery, and reduces a force in a rotating direction around the weld portion as a fulcrum in the case that a fluid pressure acts on an inner surface of the lid member by forming at least a part of a vertical cross section from an outer peripheral portion of the lid member to the through hole as an L-shaped form, thereby preventing the weld portion from being disconnected.

### Prior Art Document

### Patent Document

Patent Document 1: Japanese Unexamined Patent Publication No. 2005-308397
Patent Document 2: Korean Patent Publication No. KR20130025804
   KR20130025804 discloses a pressure sensor for detecting pressure of a flow passage through which a high-pressured refrigerant passes and for preventing damage due to the high pressure to the pressure sensor.

The pressure sensor includes a pressure detection element, a base in which the pressure detection element is fixed to an inner surface, a receiving member that is arranged to face the base, and a diaphragm, which is pinched by the base and the receiving member.

The pressure sensor also includes a pinching member. The pinching member pinches the base and the receiving member, both of which pinch the diaphragm, in such a manner so as to prevent both the base and the receiving member from moving away from each other. The pinching member is installed from any one side of the base and the receiving member.

The pressure sensor also includes liquid, which is sealed in a space between the base and the diaphragm.

The pressure sensor allows the pressure in a space between the receiving member and the diaphragm to be transmitted to the pressure detection element via the diaphragm and the liquid.
Patent Document 3: United States Patent Publication No. US3602744
   US3602744 discloses an improved quartz crystal pressure transducer, which is of simpler and less expensive construction.
Patent Document 4: United States Patent Publication No. US2005/194362A1
   US2005/194362A1 discloses an improved weld fixture apparatus as well as a welding method, which can be used with the weld fixture apparatus for properly configuring sensor packages.
Patent Document 5: United States Patent Publication No. US2008/060440A1
   US2008/060440A1 discloses a pressure sensor, which may be employed in measuring the combustion pressure in an internal combustion engine.

### SUMMARY OF THE INVENTION

### Problem to be Solved by the Invention

However, in the pressure sensor described in the patent document mentioned above, since a high pressure is repeatedly applied to the weld portion in the case that the pressure sensor is used for detecting the pressure of a refrigerant flow path of a refrigerating device or an air conditioning device using a high-pressure refrigerant such as CO2, a crack is generated in the weld portion and there is fear that a breakage is caused.

Accordingly, the present invention is made by solving the problem mentioned above, and an object of the present invention is to provide a safety pressure sensor which can prevent the pressure sensor from being broken due to a high pressure even in the case that the pressure sensor is used for detecting the pressure of the flow path through which the high pressure refrigerant such as CO2 passes.

### Means for Solving the Problem

In order to achieve the object mentioned above, according to the present invention there is provided a pressure sensor comprising:
a pressure detection element;
a base in which the pressure detection element is fixed to an inner surface;
a receiving member which is arranged so as to face to the base;
a diaphragm which is pinched by the base and the receiving member;
a pinching member which pinches the base and the receiving member in a state of pinching the diaphragm in such a manner as to prevent both of the base and the receiving member from moving away from each other, the pinching member being installed from any one side of the base and the receiving member, and being bonded by welding to any other side of the base and the receiving member in a state in which a load is applied in a direction in which both of the base and the receiving member are pressed from each other; and
a liquid which is sealed in a space between the base and the diaphragm,
wherein the pressure in the space between the receiving member and the diaphragm is transmitted to the pressure detection element via the diaphragm and the liquid.

According to the present invention, since the pinching member is bonded by welding in the state in which the load is applied in the direction in which the base and the receiving member are pressed from each other, a durability against a repeated pressure is improved, both of the base and the receiving member are not moved away from each other even in the case that the high pressure is repeatedly applied between both elements, and it is possible to avoid the crack of the weld portion even in the case that the base and the receiving member are bonded by welding, thereby preventing the pressure sensor from being broken.

In the pressure sensor mentioned above, in the case that the load is applied so as to compress an air gap formed between the pinching member and one of the base and the receiving member, it is possible to effectively press the base and the pinching member on the basis of an elastic force of the pinching member, and a durability of the pressure sensor is further improved.

Further, the pressure sensor may be structured such that an outer peripheral portion of the pinching member has a plane which is vertical to a center axis of the pinching member. It is possible to easily apply the load in the direction in which the base and the receiving member are pressed from each other, by utilizing the vertical plane.

### Effect of the Invention

As mentioned above, according to the present invention, there can be provided the safety pressure which can prevent the pressure sensor from being broken due to the high pressure, even in the case that the pressure sensor is used for detecting the pressure of the flow path through which the high-pressure refrigerant such as CO2 passes.

### BRIEF EXPLANATION OF THE DRAWINGS

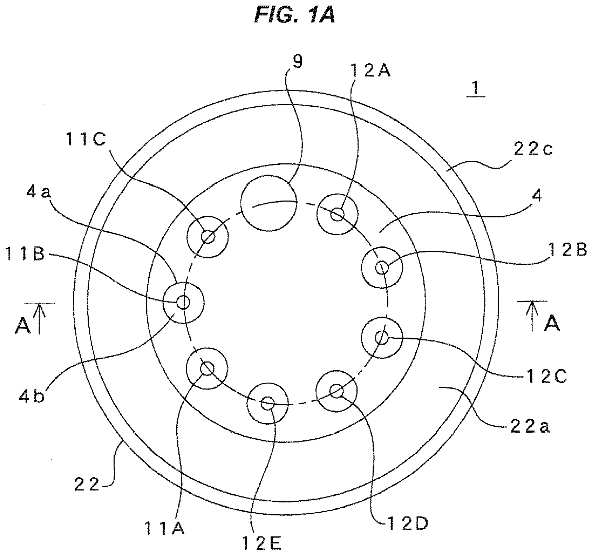

Fig. 1A is a top elevational view showing an embodiment of a pressure sensor according to the present invention; and

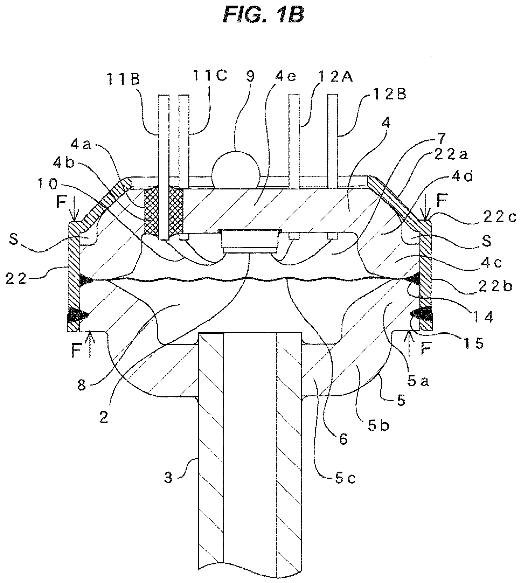

Fig. 1B is a vertical cross sectional view along a line A-A in Fig. 1A.

### Description of Reference Numerals

1 pressure sensor
2 pressure detection element
3 inflow pipe
4 base
4a through hole
4b hermetic seal
4c peripheral edge portion
4d side surface portion
4e upper surface portion
5 receiving member
5a peripheral edge portion
5b side surface portion
5c lower surface portion
6 diaphragm
7 pressure receiving space
8 pressurizing space
9 ball
10 wire
11 (11A-11C) output lead pin
12 (12A-12E) adjusting lead pin
14, 15 weld portion
22 pinching member
22a inclined portion
22b cylinder portion
22c outer peripheral portion

### DETAILED DESCRIPTION OF PREFERRED EMBODIMENT

Next, a description will be given in detail of a mode for carrying out the present invention with reference to the accompanying drawings.

Figs. 1A and 1B show a first embodiment of a pressure sensor according to the present invention, and the pressure sensor 1 is provided with a pressure detection element 2, a base 4, a receiving member 5 which is arranged so as to face to the base 4, a diaphragm 6 which is pinched by the base 4 and the receiving member 5, and a pinching member (a retention member) 22 which further pinches (retains) the base 4 and the receiving member 5 in a state of pinching the diaphragm 6. An insulative liquid (a sealed liquid) such as an oil is sealed in a pressure receiving space 7 between the base 4 and the diaphragm 6.

The pressure detection element 2 is fixed to the base 4 in an inner portion of the pressure receiving space 7. A pressurizing space 8 serving as a pressure introduction space is formed between the receiving member 5 and the diaphragm 6, and an internal space of an inflow pipe 3 to which a refrigerant flows is communicated with the pressurizing space 8.

The base 4 is formed, for example, by a press work, is provided with a swelling portion which swells upward from an inner side of a peripheral edge portion (a collar portion) 4c, and is formed as a lid shape which is open in its lower end. The swelling portion is constructed by a side surface portion 4d which rises from the inner side of the peripheral edge portion 4c, and an upper surface portion 4e which is provided continuously in the side surface portion 4d. The pressure detection element 2 is fixed to a lower surface of the swelling portion of the base 4 (that is, a lower surface of the upper surface portion 4e) by an adhesive bonding.

The receiving member 5 is formed, for example, by a press work, is provided with a swelling portion which swells downward from an inner side of a peripheral edge portion (a collar portion) 5a, and is formed as a dish shape which is open in its upper portion. The swelling portion is constructed by a side surface portion 5b which rises from the inner side of the peripheral edge portion 5a, and a lower surface portion 5c which is provided continuously in the side surface portion 5b. The inflow pipe 3 is fixed by brazing to an opening in the center of the swelling portion of the receiving member 5 (that is, the center of the lower surface portion 5c).

The diaphragm 6 is pinched its outer peripheral edge portion between the peripheral edge portion 4c of the base 4 and the peripheral edge portion 5a of the receiving member 5, and these three members 4 to 6 are simultaneously welded (a weld portion 14) by a laser welding in an outer peripheral edge portion to which an outer peripheral edge portion of the diaphragm 6 is exposed, and are integrated. The pressure receiving space 7 is charged with a sealing liquid from a filling hole (not shown) which is formed so as to pass through the upper surface portion 4e of the base 4, and the filling hole is thereafter sealed in the upper surface of the base 4 by applying a spot welding to a ball 9.

The pinching member 22 is provided with a cylinder portion 22b having an inner diameter which is somewhat larger than an outer diameter of the base 4 and the receiving member 5 in a state of pinching the diaphragm 6, and an inclined portion 22a which is formed continuously in an upper portion of the cylinder portion 22b via an outer peripheral portion 22c, and is provided so as to be inclined in a direction of a center axis of the cylinder portion 22b, and prevents the base 4 and the receiving member 5 from moving away from each other by pinching (retaining) a shoulder portion of the swelling portion of the base 4 and the peripheral edge portion 5a of the receiving member 5. The inclined portion 22a is formed as a frustum of a cone in a side elevational shape. The outer peripheral portion 22c is provided with a plane which is vertical to the center axis of the pinching member 22.

In the case that the base 4 and the receiving member 5 are pinched by the pinching member 22, in a state in which the cylinder portion 22b of the pinching member 22 is installed to the outer periphery of the peripheral edge portions 4c and 5a of the base 4 and the receiving member 5 from the base 4 side, and an inner surface of the inclined portion 22a comes into contact and engages with the shoulder portion of the swelling portion of the base 4 (that is, the inclined portion of the side surface portion 4d), the lower portion of the cylinder portion 22b is welded and bonded by a laser welding to the side surface of the peripheral edge portion 5a of the receiving member 5, in a state in which a load F is applied to the outer peripheral portion 22c of the pinching member 22 and the lower surface of the peripheral edge portion 5a in the receiving member 5, in a direction in which the base 4 and the receiving member 5 are pressed to each other (a weld portion 15). A durability against a repeated pressure is improved by welding and bonding the pinching member 22 in the state in which the load is applied in the direction in which the base 4 and the receiving member 5 are pressed to each other.

In this embodiment, the pinching member 22 is installed to the outer peripheries of the peripheral edge portions 4c and 5a of the base 4 and the receiving member 5 from the base 4 side, and the air gap S is formed between the inner wall of the outer peripheral portion 22c and the peripheral edge portion 4c of the base 4 in a state in which the inner surface of the inclined portion 22a comes into contact and engages with the shoulder portion of the swelling portion in the base 4. Therefore, in the case that the load F is applied so as to compress the air gap S, the outer peripheral portion 22c moves to the air gap S side by a small distance, and the inclined portion 22a presses the side surface portion 4d with a snapping force. The pinching member 22 is fixed in a state in which the side surface portion 4d of the base 4 applies a stress to the receiving member 5 side, by welding and bonding the cylinder portion 22b and the peripheral edge portion 5a under the state mentioned above.

Further, since the base 4 can be supported closer to the inner side than the peripheral edge portion 4c, it is possible to effectively suppress the deformation of the base 4 at the high pressure introducing time, an excessive stress applied to a hermetic seal 4b portion, and it is possible to reinforce a breakage preventing effect of the seal portion.

In the case that it is intended to suppress the deformation of the receiving member 5, the pinching member 22 may be attached while being reversed in a vertical direction. In this case, the inclined portion 22a may be engaged with the shoulder portion of the swelling portion (the inclined portion of the side surface portion 5b) in the receiving member 5 from the receiving member 5 side, and the cylinder portion 22b may be welded and bonded to the side surface of the peripheral edge portion 4c in the base 4 in a state in which the load is applied.

The pressure detection element 2 is an IC chip which is constructed, for example, by a piezoelectric element and a signal processing circuit. The piezoelectric element is one of ferroelectric substances, is also called as a piezoelectric device, and is structured such as to generate an electric voltage in the case that the force such as the vibration or the pressure is applied, and extend and contract on the contrary in the case that the electric voltage is applied.

The pressure detection element 2 is electrically connected to output lead pins 11 (11A to 11C) and adjusting lead pins 12 (12A to 12E) passing through a through hole 4a formed on the upper surface portion 4e of the base 4 via a wire 10. The output lead pin 11 is structured such as to output a voltage signal in correspondence to the pressure detected by the pressure detection element 2 to an external portion, and the adjusting lead pin 12 is used for compensating the electric voltage at the manufacturing time. In this example, three output lead pins 11A to 11C, the adjusting lead pins 12A to 12E and the filling hole mentioned above are arranged on the same circumference from the center of the base 4 by a uniform angle.

The through hole 4a of the base 4 passes the output lead pin 11 and the adjusting lead pin 12 therethrough, and is thereafter sealed by the hermetic seal 4b so as to prevent the sealed liquid from leaking. The output lead pin 11 is connected to a base plate (not shown) in its upper end portion, and the base plate is connected to an external output lead wire further via a connector (not shown).

In the pressure sensor 1 having the structure mentioned above, the pressure of the pressurizing space 8 is changed by the pressure change of the refrigerant flowing into from the inflow pipe, and changes the diaphragm 6. The pressure of the sealed liquid in the inner portion of the pressure receiving space 7 is changed by the deformation of the diaphragm 6, and the pressure change is propagated to the pressure detection element 2. The pressure detected by the pressure detection element 2 is converted into the electric voltage, and a predetermined voltage compensation is carried out in correspondence to the characteristic of the pressure sensor 1 by a compensating circuit. The compensated voltage signal is transmitted to the external output lead wire via the output lead pin 11, the base plate and the connector.

In the case that the pressure sensor 1 is used for detecting the pressure of the refrigerant flow path of the air conditioning device using the high pressure refrigerant such as CO2, the high pressure of the refrigerant flowing into from the inflow pipe 3 is repeatedly applied to the pressurizing space 8, and the great force is repeatedly applied in a direction of moving the base 4 and the receiving member 5 away from each other. However, since the pinching member 22 is welded and bonded in the state in which the base 4 and the receiving member 5 are applied the load in the direction in which they are pressed to each other, and the respective peripheral edge portions of the base 4 and the receiving member 5 are pinched by the pinching member 22, as well as the receiving member 5 and the diaphragm 6 are integrated by the weld portion 14, there is no risk that a crack is generated in the weld portion 14, and it is possible to effectively prevent the pressure sensor 1 from being broken.

In the embodiment mentioned above, the outer peripheral portion 22c is formed as the plane which is vertical to the center axis of the pinching member 22, and the pinching member 22 is welded and bonded by applying the load F to the outer peripheral portion 22c and the lower surface of the peripheral edge portion 5a of the receiving member 5 in the direction in which the base 4 and the receiving member 5 are pressed to each other, however, the position to which the load F is applied, is not limited to the outer peripheral portion 22c, but an outer peripheral side of the inclined portion 22a of the pinching member 22 may be utilized so that the air gap S is compressed. In this case, it is possible to omit the plane portion (the outer peripheral portion 22c) which is provided in the boundary portion between the cylinder portion 22b and the inclined portion 22a, and is vertical to the center axis of the pinching member 22.

## Claims

1. A pressure sensor (1) comprising:
a pressure detection element (2);
a base (4) in which said pressure detection element (2) is fixed to an inner surface;
a receiving member (5) which is arranged so as to face to said base (4);
a diaphragm (6) which is pinched by said base (4) and said receiving member (5);
a pinching member (22) which pinches said base (4) and said receiving member (5) in a state of pinching said diaphragm (6) in such a manner as to prevent both of said base (4) and said receiving member (5) from moving away from each other, the pinching member (22) being installed from any one side of said base (4) and said receiving member (5), and being bonded by welding to any other side of said base (4) and said receiving member (5); and
a liquid which is sealed in a pressure receiving space (7) between said base (4) and said diaphragm (6),
wherein a pressure in a pressurizing space (8) between said receiving member (5) and said diaphragm (6) is transmitted to said pressure detection element (2) via said diaphragm (6) and said liquid,
**characterized in that**
the pinching member (22) comprises:
a cylinder portion (22b) having an inner diameter which is somewhat larger than an outer diameter of the base (4) and the receiving member (5) in a state of pinching the diaphragm (6),
an outer peripheral portion (22c) having a plane which is vertical to a center axis of the pinching member (22), and
an inclined portion (22a) which is formed continuously in the upper portion of the cylinder portion (22b) via the outer peripheral portion (22c), and is provided so as to be inclined in a direction of a center axis of the cylinder portion (22b),
wherein a gap (S) is formed between said pinching member (22) and one of said base (4) and said receiving member (5), and
wherein the welding is done in a state in which a load (F) is applied in a direction in which both of the base (4) and the receiving member (5) are pressed towards each other so as to compress the air gap (S).

## Patentansprüche

1. Ein Drucksensor (1) aufweisend:
ein Druckerkennungselement (2);
eine Basis (4) in der das Druckerkennungselement (2) an einer inneren Oberfläche befestigt ist;
ein Aufnahmeelement (5), das so angeordnet ist, dass es der Basis gegenüberliegt (4);
eine Membran (6), die durch die Basis (4) und durch das Aufnahmeelement (5) eingeklemmt wird;
ein Einklemmelement (22), das die Basis (4) und das Aufnahmeelement (5) in einem Zustand des Einklemmens der Membran (6) so einklemmt, dass sowohl die Basis (4) als auch das Aufnahmeelement (5) daran gehindert werden, sich voneinander wegzubewegen, wobei das Einklemmelement (22) von einer beliebigen Seite der Basis (4) und des Aufnahmeelements (5) her installiert ist, und wobei es durch Anschweißen an einer beliebigen anderen Seite der Basis (4) und an dem Aufnahmeelement (5) durch Anschweißen verbunden ist; und
eine Flüssigkeit, die in einem Druckaufnahmeraum (7) zwischen der Basis (4) und der Membran (6) dicht eingeschlossen ist,
wobei ein Druck in einem Druckbeaufschlagungsraum (8) zwischen dem Aufnahmeelement (5) und der Membran (6) über die Membran (6) und die Flüssigkeit auf das Druckerkennungselement (2) übertragen wird,
**gekennzeichnet dadurch, dass**
das Einklemmelement (22) folgendes aufweist:
einen Zylinderbereich (22b), der einen inneren Durchmesser aufweist, der etwas größer als ein äußerer Durchmesser der Basis (4) und des Aufnahmeelements (5) in einem Zustand des Einklemmens der Membran (6) ist, und
ein äußerer Umfangsbereich (22c), der eine Ebene aufweist, die senkrecht zu einer Mittelachse des Einklemmelementes (22) ist, und einen geneigten Bereich (22a), der in dem oberen Bereich des Zylinderbereichs (22b) über den äußeren Umfangsbereich (22c) hinweg durchgehend ausgeformt ist, und der so vorgesehen ist, dass er in Richtung auf eine Mittelachse des Zylinderbereichs (22b) geneigt ist,
wobei ein Spalt (S) zwischen dem Einklemmelement (22) und einem von der Basis (4) und dem Aufnahmeelement (5) ausgeformt ist, und
wobei das Schweißen in einem Zustand ausgeführt wird, in dem eine Last (F) in einer Richtung in der sowohl die Basis (4) und das Aufnahmeelement (5) aufeinander zu gepresst sind aufgebracht ist, so dass der Luftspalt (S) zusammengedrückt wird.

## Revendications

1. Un capteur de pression (1) comprenant :
un élément de détection de pression (2);
une base (4) dans laquelle l'élément de détection de pression (2) est fixé à une surface intérieure;
un élément récepteur (5) qui est arrangé afin de faire face à la base (4);
un diaphragme (6) qui est pincé par la base (4) et l'élément récepteur (5);
un élément de pincement (22) qui pince la base (4) et l'élément récepteur (5) dans un état de pincer le diaphragme (6) de manière qu'il empêche et la base (4) et l'élément récepteur (5) de s'éloigner l'un de l'autre, l'élément de pincement (22) étant installé depuis un côté quelconque de la base (4) et de l'élément récepteur (5), et ceci étant lié par soudage à n'importe quel autre côté de la base (4) et de l'élément récepteur (5); et
un liquide qui est scellé dans un espace de réception de pression (7) entre la base (4) et le diaphragme (6),
dans lequel une pression dans un espace de pressurisation (8) entre l'élément récepteur (5) et le diaphragme (6) est transmise à l'élément de détection de pression (2) par le diaphragme (6) et le liquide,
**caractérisé en ce que**
l'élément de pincement comprend:
une partie de cylindre (22b) ayant un diamètre qui est quelque peu plus large qu'un diamètre extérieur de la base (4) et l'élément récepteur (5) dans un état de pincer le diaphragme (6),
une partie extérieur périphérique (22c) ayant un plan qui est vertical par rapport à un axe central de l'élément de pincement (22),
et une partie inclinée (22a) qui est formée de manière continue dans la partie supérieure de la portion de cylindre (22b) par la parte extérieure périphérique (22c), et qui est pourvue de sorte qu'elle est inclinée dans une direction d'un axe central de la partie de cylindre (22b),
dans lequel une fente (S) est formée entre l'élément de pincement (22) et l'un de la base (4) et l'élément récepteur (5), et
dans lequel le soudage est effectué dans un état dans lequel une charge (F) est appliquée dans une direction dans laquelle tous les deux, la base (4) et l'élément récepteur (5), sont appuyés l'un vers l'autre afin de comprimer la fente d'air (S).
